Europäisches Patentamt

European Patent Office

Office européen des brevets

(11) Veröffentlichungsnummer: 0 322 593
A2

# (12) EUROPÄISCHE PATENTANMELDUNG

(21) Anmeldenummer: 88120107.3

(22) Anmeldetag: 02.12.88

(51) Int. Cl.⁴: B60T 17/08

(30) Priorität: 24.12.87 DE 3744202

(43) Veröffentlichungstag der Anmeldung:
05.07.89 Patentblatt 89/27

(84) Benannte Vertragsstaaten:
AT CH DE ES FR GB IT LI SE

(71) Anmelder: Bergische Stahl-Industrie
Papenbergerstrasse 38
D-5630 Remscheid(DE)

(72) Erfinder: Rocholl, Hans
Damaschke-Strasse 17a
D-5630 Remscheid(DE)
Erfinder: Klein, Horst
Erlen-Strasse 23
D-5630 Remscheid(DE)

(74) Vertreter: Jung, Hermann L., Dipl.-Chem.
Postfach 1728 Augusta-Allee 10
D-6380 Bad Homburg v.d.H.(DE)

(54) Bremsbetätigungszylinder mit Federspeicher.

(57) Die Erfindung betrifft einen Bremsbetätigungszylinder mit Federspeicher, bei dem die Speicherfeder (14) über eine lösbare Kupplung, beispielsweise eine Kugelkupplung (18), mit dem Abtriebskopf (11) verbunden ist.

EP 0 322 593 A2

# Bremsbetätigungszylinder mit Federspeicher

Die Erfindung betrifft einen Bremsbetätigungszylinder mit Federspeicher, bei dem die Speicherfeder über Zwischenglieder mit dem Abtriebskopf verbunden ist.

Federspeicherbremszylinder, mit denen die Bremse automatisch betätigt wird, wenn der Betriebsdruck für die normale Bremsung ausfällt, besitzen einen grossen Nachteil. Es müssen umständliche Vorrichtungen vorgesehen werden, um den Federdruck für den Fall auszuschalten, wenn das Fahrzeug mit der eingefallenen Federspeicherbremse manövriert werden muss. Diese ist immer dann der Fall, wenn der Bremsdruck aufgrund eines Fehlers in dem Bremszylinder und nicht wegen des von der Lokomotive kommenden Drucks ausfällt.

Der vorliegenden Erfindung liegt daher die Aufgabe zugrunde, den eingefallenen Federspeicher mit einfachen Mitteln soweit zu lösen, dass die Bremswirkung aufgehoben ist.

Die Lösung dieser Aufgabe besteht darin, dass zwischen der Speicherfeder und dem Abtriebskopf eine lösbare Kupplung, beispielsweise eine Kugelkupplung, angeordnet ist.

Der Vorteil dieser Erfindung liegt vor allem darin, dass die Kupplung ohne grossen Kraftaufwand gelöst werden kann und dann die Bremswirkung der Speicherfeder schon aufgehoben ist, sodass dann das Fahrzeug manövrierfähig ist.

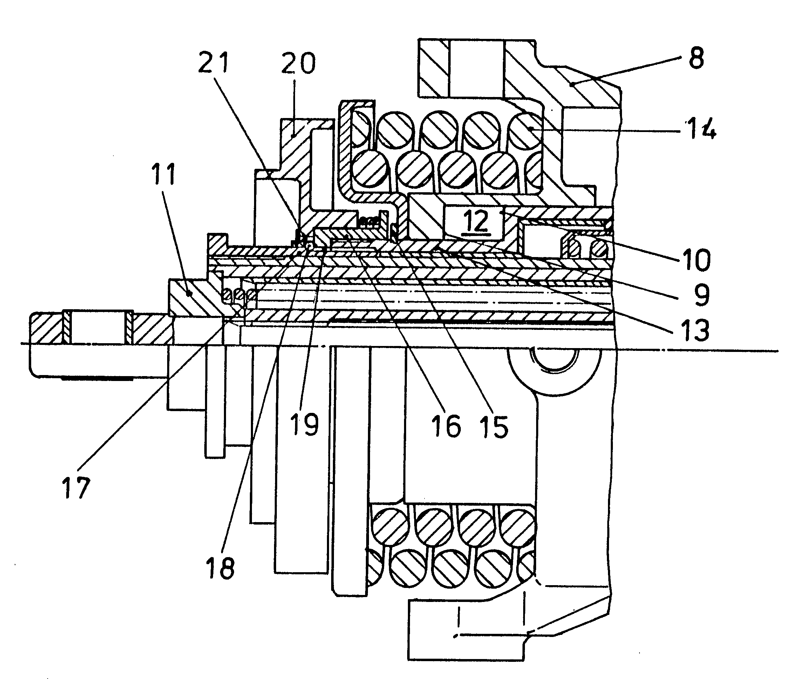

In der Zeichnung ist eine beispielsweise Ausführungsform der Erfindung an einer Speicherfederbremse mit selbsttätiger Spielnachstellung dargestellt, wobei der nicht dargestellte Betriebsbremszylinder auf den mit den Bremsbacken oder Bremshebeln verbundenen Abtriebskopf 11 wirkt, wenn der Bremsdruck in den Betriebszylinder gegeben wird. Da der Betreibsdruck auch gleichzeitig immer im Raum 12 vorhanden ist, wird der Ringkolben 13 in der in der Zeichnung dargestellten Stellung gehalten, in der die Speicherfeder 14 von dem mit dem Kolben 13 verbundenen Anschlag 15 gespannt wird. Zwischen einem auf dem hinteren Teil des Kolbens 13 angeordneten Zwischenstück 16 und dem mit dem Abtriebskopf 11 verbundenen Rohr 17 ist eine Kugelkupplung 18 angeordnet. Diese Kupplung 18 besteht aus mehreren Kugeln, welche teilweise in achsparallelen Nuten 19 des Kolbens 13 und zum anderen Teil an dem Rohr 17 anliegen und von der Verschlusscheibe 2o in der in der Zeichnung dargestellten Stellung gehalten werden, in der die Kugeln eine feste Verbindung des Rohres 17 mit dem Zwischenstück 16 bzw. dem Kolben 13 bewirken. Die Verschlusscheibe 2o hat radial nach aussen sich erstreckende Ausnehmungen 21 in gleicher Anzahl, wie die Kugeln, wobei durch Drehung der Verschlusscheibe 2o ermöglicht wird,dass sich die Kugeln aus der Verschlusstellung radial nach aussen bewegen und damit die Verbindung zwischen dem Rohr 17 und dem Kolben 13 bzw. dem Zwischenstück 16 aufgehoben wird.

Fällt nun der Betriebsdruck für die Bremse aus, so wird auch der Raum 12 drucklos und die Speicherfeder 14 drückt über den Anschlag 15, den Kolben 13 bzw. das Zwischenstück 16, über die Kugeln 18 auf des Rohr 17, das seinerseits in hier nicht dargestellter Weise (weil ausserhalb des Zeichnungsausschnitts) mit dem Abtriebskopf 11 verbunden ist, fest auf die Bremsflächen und bremst das Fahrzeug bis zum Stillstand ab. Soll jetzt aber der Bremsdruck auf den Abtriebskopf aufgehoben werden, um das Fahrzeug manövrieren zu können, so genügt es, die Verschlusscheibe 2o sowit zu drehen, bis die Kugeln 18 der Kugelkupplung vor den radialen Ausnehmungen der Verschlusscheibe 2o liegen und die Kugeln sich aus ihrem Bett im Rohr 17 radial nach aussen verschieben, wodurch die Verbindung zwischen dem Rohr 17 und dem Zwischenstück 16 bzw. dem Kolben 13 und damit der Speicherfeder 14 aufgehoben ist. Die Feder 14 stützt sich dann mit der Schulter 1o des Kolbens 13 an der Schulter 9 des Zylindergehäuses 8 ab, wodurch der Druck der Feder 14 von den Bremsflächen entfernt gehalten wird. Dies bedeutet, dass nicht mehr gebremst wird, sodass das Fahrzeug verschoben werden kann.

## Ansprüche

Bremsbetätigungszylinder mit Federspeicher, bei dem die Speicherfeder mit dem Abtriebskopf verbunden ist, dadurch gekennzeichnet, das zwischen Speicherfeder (14) und Abtriebskopf (11) eine lösbare Kupplung, beispielsweise eine Kugelkupplung (18), angeordnet ist.